# EUROPEAN PATENT SPECIFICATION

(11) **EP 3 760 370 B1**
(45) Date of publication and mention of the grant of the patent: **30.03.2022**
(21) Application number: 20180431.7
(22) Date of filing: 17.06.2020
(51) Int. Cl.: B23Q 1/03, B23Q 3/08, B27M 1/08

(54) **METHOD FOR POSITIONING AN ELEMENT ON A PANEL AND MACHINE THEREFOR**
VERFAHREN ZUR POSITIONIERUNG EINES ELEMENTES AUF EINER TAFEL UND MASCHINE DAFÜR
METHODE DE POSITIONNEMENT D'UN ELEMENT SUR UNE PLANCHE ET MACHINE CORRESPONDANTE

(30) Priority: 04.07.2019 IT 201900010902
(43) Date of publication of application: 06.01.2021
(73) Proprietor: SCM Group S.p.A., 47921 Rimini (RN) (IT)
(72) Inventor: FERRI, Mirko, 47921 Rimini (RN) (IT)
(74) Representative: Tiburzi, Andrea

(56) References cited:
- EP-A1- 3 213 896
- DE-A1-102013 104 890
- DE-A1-102015 014 585

## Description

The present invention relates to a method for positioning an element on a panel and machine thereof.

### Field of the invention

More specifically, the invention relates to a method and a machine of the above type, studied and realized in particular to position on a support panel at least one element, such as for example a suction cup or a panel to be machined.

In the following the description will be directed to the positioning of suction cups and panels to be machined on a support panel, but it is clear that the same should not be considered limited to this specific use.

### Prior art

As is well known, currently the machining of wooden panels and the like is carried out by cutting or milling.

These operations can be carried out by a single machine equipped with one or more working heads, which are movable with respect to the panel to be worked.

In particular, a machining tool is installed on each machining head to perform profiling operations such as, for example, cutting, shaping, milling, etc.

Furthermore, these machining heads allow the passage from one type of machining to another, replacing the respective machining tool.

By way of example, the same machining head is capable of passing from a "nesting" machining type, in which the cutting of the panel is optimized and the waste is reduced, to a milling one, in which the panel is suitably shaped and rounded.

Typically, the working of the panels is carried out by positioning the panel to be machined on a support panel (called in jargon a "sacrificial panel"), which is in turn arranged on a respective work table.

In the remainder of the description, the support panel will be referred to as the "sacrificial panel".

This sacrificial panel, such as an MDF panel ("Mediumdensity fibreboard"), is usually a transpiring panel, possibly equipped with a plurality of small holes.

In particular, in case of a transpiring sacrificial panel, a vacuum condition can be created beneath it, to hold in position said elements.

Furthermore, it can be involuntarily engraved, shaped, or modified during the machining phases of the panels and therefore, at times, needs to be replaced.

As mentioned, the panels to be machined are typically positioned above the sacrificial panel, such as for example wood, wood fiber, plastic, fiberglass, or similar panels.

Alternatively, if it is necessary to carry out, for example, machining on the side edges of the panel to be machined, one or more suction cups must be positioned above the sacrificial panel, suitably spaced from each other to support the panel to be machined.

Therefore, the positioning on the sacrificial panel of panels, suction cups or further pieces to be machined, depends on the type of machining to be carried out.

More specifically, the positioning of these elements can be carried out manually, by an operator, placing them on the sacrificial panel without any reference, or, in a semi-automatic way, by means of a laser pointer installed on the machine far from the positioning point.

However, one of the main drawbacks of these known solutions consists in the fact that the elements can be positioned incorrectly on the sacrificial panel.

In fact, in case of manual positioning, the correct position of the elements substantially depends on the operator's experience, while, in case of semi-automatic positioning, the elements can move with respect to their original assigned position, without the operator being noticing, thus placing himself in the wrong positions.

A further drawback of these known solutions consists in the fact that the manual or semi-automatic positioning of the elements requires long machine downtimes, thus increasing the costs for machining the panels.

Another drawback of these known solutions consists in the fact that the positioning of irregularly shaped panels can be particularly imprecise. In fact, at present, the operators must take appropriate measures to overcome this drawback, with a consequent further lengthening of the machine downtime.

Finally, in the case of the same type of machining performed in sequence on a plurality of panels, another drawback of these known solutions consists in the fact that, when these panels are replaced, the operator may not be aware of any movement of the same panels or suction cups with respect to their original position, with consequent errors and production delays. EP 3 213 896 A1 discloses a method according to the preamble of claim 1 and a machine according to the preamble of claim 10.

### Scope of the invention

In light of the above, it is therefore an object of the present invention to provide a method for positioning at least one element on a sacrificial panel, which overcomes the disadvantages of the known systems mentioned above.

Another object of the invention is to provide a method of positioning at least one element on a sacrificial panel, which is quick and which minimizes machine downtime.

A further object of the invention is to provide a method of positioning at least one element on a sacrificial panel, which is independent of the operator's level of experience.

Another object of the invention is to provide a method of positioning at least one element on a sacrificial panel, which is highly reliable, relatively simple to manufacture, and at competitive costs if compared to the prior art.

Finally, the object of the present invention is to provide a machine for carrying out this method.

### Object of the invention

It is therefore specific object of the present invention a method for positioning at least one element on a supporting panel, such as a sacrificial panel, arranged on a work table of a machine for machining wood panels and the like, wherein said method comprises the following steps: A) reading positioning data of said at least one element (P, V1, V2, V3, V4) on said sacrificial panel; B) marking, on the upper surface of said sacrificial panel, at least one positioning sign associated to said positioning data of said at least one element; and C) placing said at least one element in correspondence of the respective positioning sign.

Advantageously according to the invention, said positioning signs may be graphic signs.

Always according to the invention, said positioning signs may be engravings.

Still according to the invention, said at least one element may be a panel to be machined.

Preferably according to the invention, said at least one element may comprise at least one blocking/realizing mean for said panels to be machined, wherein said blocking/releasing means are preferably suction cups.

Advantageously according to the invention, said step C) may comprise the following sub-step: C1) at least partially covering, by means of said at least one element, said positioning signs.

Still according to the invention, said sacrificial panel may be transpiring, and in comprising, after said step C), the following further step: D) making, between said sacrificial panel and said work table, a vacuum condition so as to hold in position said at least one element.

Always according to the invention, said method may comprise, after said step C), the following further step: E) deleting said positioning signs marked on said sacrificial panel, so as to re-use said sacrificial panel for further machining.

Conveniently according to the invention, said step B) may comprise the sub-step of marking, on the upper surface of said sacrificial panel, at least a first and a second positioning sign, wherein said first positioning sign has a different shape and/or hatching and/or colour than said second positioning sign.

It is further object of the present invention a machine for machining panels, comprising a work table, intended to support at least one sacrificial panel, a baseplate, on which said work table is arranged, a transverse, moveable over said work table, in a direction along a first axis, and a group, moveable along said transverse, in a direction along a second axis, perpendicular to said first axis, and along a third axis perpendicular to said first axis and to said second axis, wherein said group further comprises a writing tool and/or a milling member, wherein said writing tool and/or said milling member are capable of marking at least one positioning sign on said sacrificial panel, said machine being characterised in comprising a logic control unit configured for moving said machining head, so as to execute the method according to any one of the preceding claims.

Always according to the invention, said group may comprise a machining head, and in that said writing tool and/or milling member are removably coupled to said machining head.

Still according to the invention, said writing tool may be capable of marking said at least one positioning sign on said sacrificial panel by means of ink or pencil, wherein said positioning signs can have different shapes and/or hatchings and/or colours.

Always according to the invention, said writing tool may have elastic means for absorbing shocks between said writing tool, in use, and said sacrificial panel.

Advantageously according to the invention, said machine may comprise at least one deleting mean, preferably a milling cutter or a planer, for deleting said positioning signs marked on said sacrificial panel so as to re-use said sacrificial panel for further machining.

Preferably according to the invention, said machine may comprise a storage for storing at least one writing tool and/or said milling member.

### Brief description of the drawings

The present invention will be now described, for illustrative but not limitative purposes, according to its preferred embodiments, with particular reference to the figures of the enclosed drawings, wherein:
figure 1 illustrates, in perspective view, a machine comprising a sacrificial panel on which a positioning indication is drawn, according to the method of the present invention;
figure 2 illustrates a top view of the machine of figure 1;
figure 3 illustrates, in a perspective view, a panel to be machined positioned in correspondence with the positioning indication of figure 1, according to the present invention;
figure 4 illustrates a top view of the panel to be machined of figure 3;
figure 5 illustrates, in perspective view, the machine of figure 1 comprising a sacrificial panel, on which a plurality of positioning indications are drawn, according to the method of the present invention;
figure 6 illustrates a top view of the machine of figure 5;
figure 7 illustrates, in a perspective view, a plurality of suction cups positioned on sacrificial panels according to the present invention;
figure 8 illustrates a top view of the machine of figure 7;
figure 9 illustrates, in perspective view, a writing tool, according to the present invention; and
figure 10 illustrates a side view of the writing tool of figure 9.

In the various figures, similar parts will be indicated by the same reference numbers.

### Detailed description

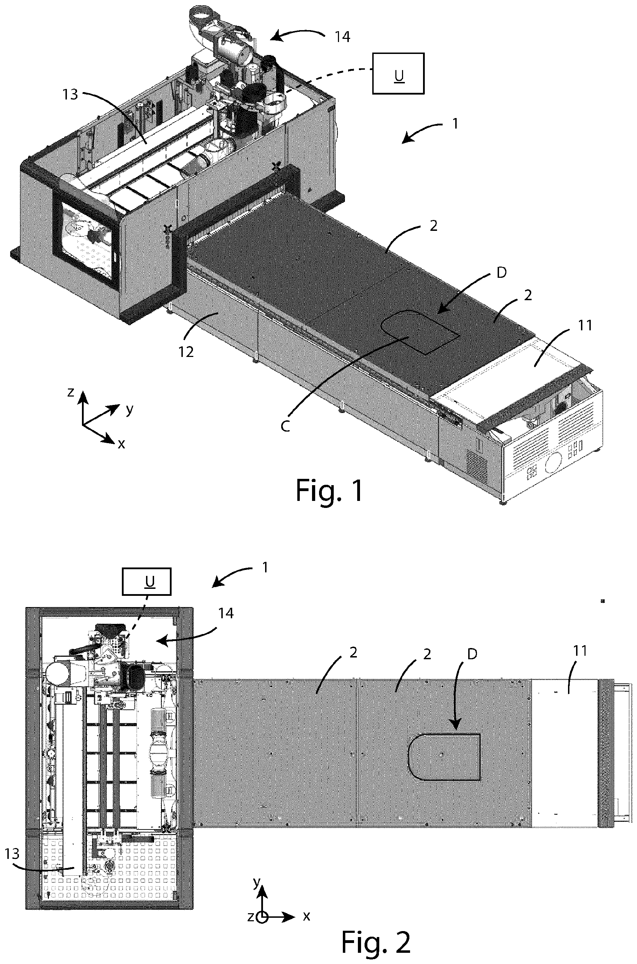

With reference to figures 1-8, the machine for machining panels and the like can be seen, indicated by the numeral reference 1, substantially comprises a work table 11, two sacrificial panels 2, arranged on said work table 11, a machining head 4 and a logic control unit U, connected to said machining head 4.

The machine 1 also comprises a base 12, on which said work table 11 is arranged, and a crosspiece 13, movable, with reference to the Cartesian triad XYZ, shown in figure 1, in the direction of the X-axis above the work table 11.

Said machine 1 also comprises a group 14, also called working group 14, movable along said crosspiece 13, in the direction of the Y-axis. On said working group 14 said machining head 4 is installed, which equips a spindle 400, better described below, capable of installing a machining tool, for machining panels.

In this way, it is possible to reach with a machining tool any point of the work table 11, to carry out the machining.

Said work table 11, arranged on the horizontal plane XY, is intended, among other things, to support the sacrificial panels 2 during the machining steps. In further embodiments of the present invention, said work table 11 can be inclined with respect to the horizontal plane XY.

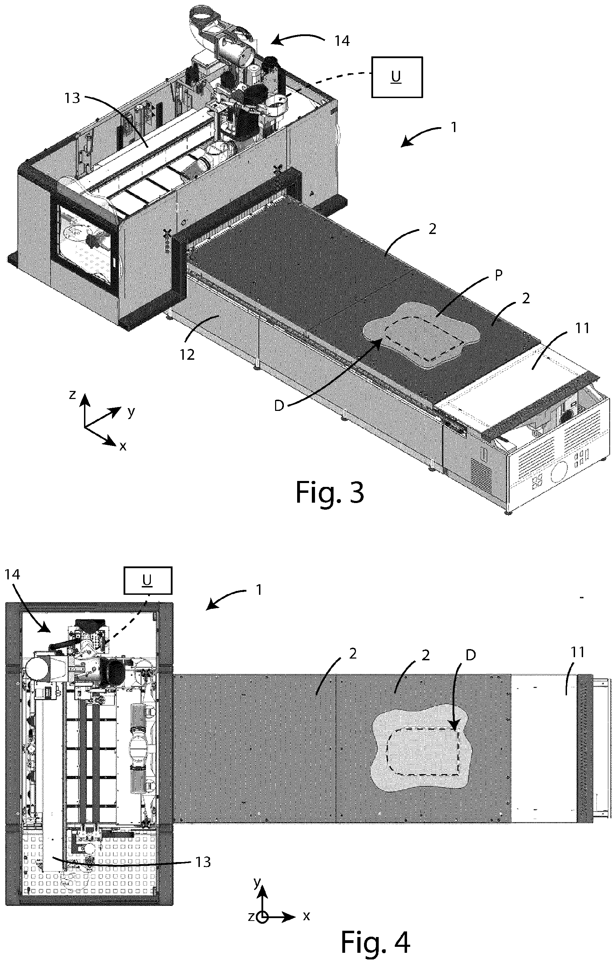

Furthermore, as can be seen in figures 3, 4, and 7, 8, elements P, V1, V2, V3, V4 are shown arranged on the sacrificial panel 2.

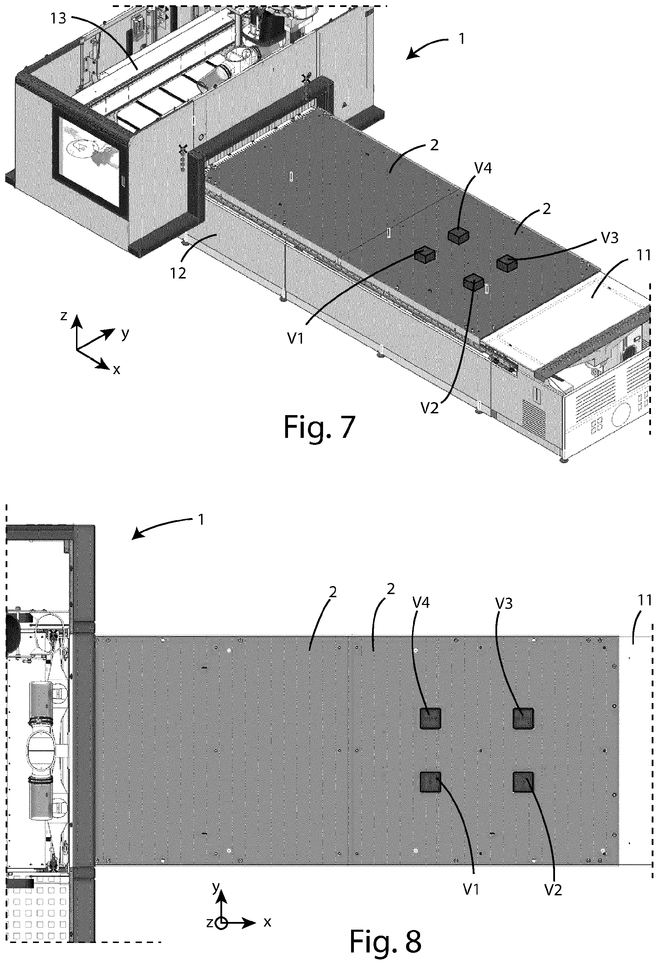

In particular, in figures 3 and 4 there is an example of a panel P to be machined, having an irregular shape, while in figures 7 and 8 are shown four blocking/releasing means V1, V2, V3, V4 for elements to be machined. In particular, the blocking/releasing means V1, V2, V3, V4 shown are suckers.

Specifically, the P panels to be machined include wood panels and the like, which may be of regular or non-regular shape.

In fact, each sacrificial panel 2 is positioned on said work table 11, so as to support panels P to be machined, both in the case in which they rest directly on said sacrificial panel 2, and in the case in which they are spaced from said sacrificial panel 2 by means of said suction cups V1, V2, V3, V4.

Furthermore, each sacrificial panel 2 can be made of MDF material.

As said, in the embodiment that is described, there are two sacrificial panels 2, however in further embodiments these sacrificial panels 2 can be in a number other than two, for example even one.

Furthermore, in the present embodiment, said sacrificial panels 2 are transpiring so that it is possible to create a vacuum condition between said work table 11 and each sacrificial panel 2. This allows said panels P to be worked and/or said suction cups V1, V2, V3, V4 to be held in position by means of this vacuum condition, once positioned on said respective sacrificial panels 2.

Said machining head 4 is movable along with the aforementioned three Cartesian directions X, Y, Z with respect to said work plane 11 and is controlled by said logic control unit U. For example, the working group 14 is movable along the second Cartesian direction Y and along the third Cartesian direction Z, while the crosspiece 13 is movable along the first Cartesian direction X, thus allowing the movement of the machining head 4 along said three Cartesian directions X, Y, Z.

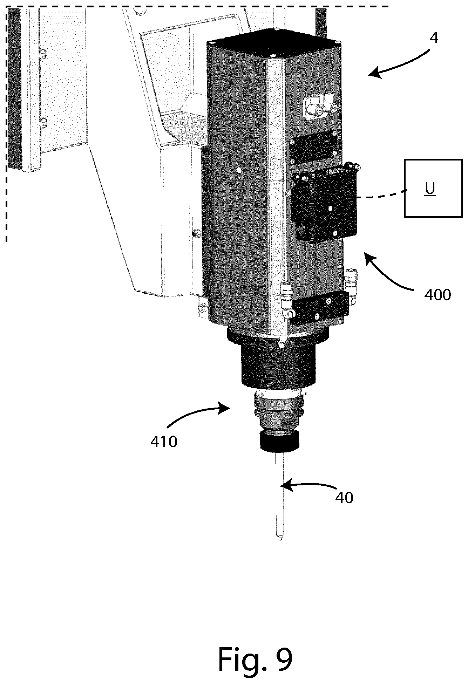

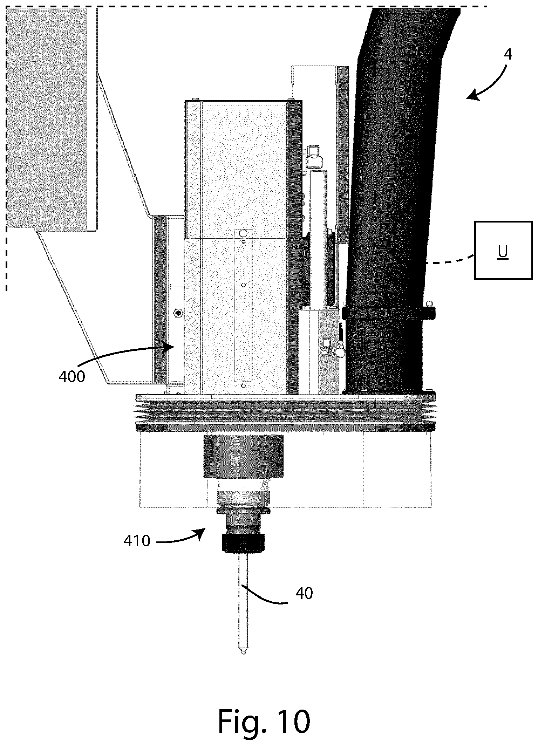

As said and as can be seen from figures 9 and 10, said machining head 4 is provided with a mandrel 400 for clamping or holding stationary the machining tool. In particular, said mandrel 400 comprises a seat 410, on which various machining tools can be installed.

Such machining tools comprise a writing tool 40, and other tools (not shown) for machining the panels, such as for example a cutter, and a disc blade. In an alternative embodiment, said writing tool 40 can be installed directly on the working group 14.

Furthermore, these machining tools can be placed in respective positions of a tool magazine, preferably positioned on said crosspiece 13.

In the embodiment described, said machining head 4, when coupled to said writing tool 40, allows drawing, on said sacrificial panel 2, positioning indications, such as for example points, lines, curves or geometric figures, for indicating to the user the correct positioning of the elements to be machined. Alternatively, said positioning indications can be incisions, made by means of suitable milling members (not shown in the figure).

The writing tool 40 can produce positioning indications D, intended for positioning a panel P to be machined, or positioning indications D1, D2, D3, D4, for positioning the suction cups V1, V2, V3, V4.

In particular, said positioning indications D can be used for example to position panels P of irregular shape, not referable by means of an abutment element arranged on the work table 11.

In fact, as can be seen from figures 3 and 4, said positioning indications D can have a shape such that said panel P, once placed on said sacrificial panel 2, completely covers the shape of the positioning indications D. In fact, in this situation, the positioning indication D, which in the case at issue also represents the shape of the machining or cutting profile, defines an area on which positioning the panel P, guaranteeing its correct positioning and avoiding possible positioning errors.

In other words, as shown in figures 1-4, said machining head 4, when coupled to said writing tool 40, allows to draw machining profiles D on the sacrificial panel 2, to indicate the user the correct positioning and size of the P panels to be machined.

By way of example, said machining profiles D can have a substantially rectangular shape for respective panels P having an irregular shape, or a shape (not shown) similar to that of the respective panel P to be machined.

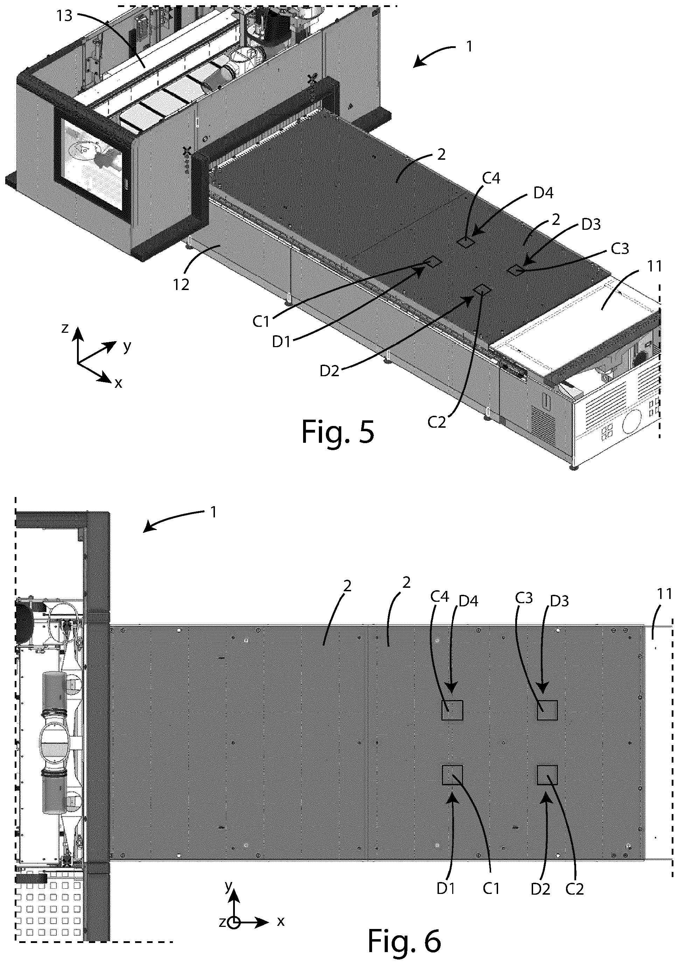

In addition, as said and as shown in figures 5-8, the writing tool 40 can draw on the panel 2 positioning indications D1, D2, D3, D4, for the positioning of the suction cups V1, V2, V3, V4.

In particular, the number of suction cups V1, V2, V3, V4 to be positioned on each sacrificial panel 2 depends on the size of the respective panel P to be machined.

By way of example, in the case of panels P to be machined of small dimensions, only one suction cup can be used.

Said suction cups V1, V2, V3, V4 are positioned so that they do not interfere with the tools during the machining, and that they ensure that the panel P is firmly positioned. Therefore, once the vacuum has been positioned and applied by means of the appropriate means, which the machine 1 is equipped with, such as a vacuum pump, they fix the panel P in position.

Furthermore, the positioning indications D, D1, D2, D3, D4 respectively associated with the panels P and the suction cups V1, V2, V3, V4, can be graphic signs of different shapes, color, the thickness of drawn line and stroke. In particular, these graphic signs allow to identify the respective areas, within which positioning said elements P, V1, V2, V3, V4 on the respective sacrificial panel 2.

Furthermore, said graphic signs can allow to identify the different types of machining, based on the machining of the required panel P.

Alternatively, the positioning indications indicated above can be markers or signs, such as "X", "*", etc., to identify the respective points with respect of which centering or placing the P panel or the suction cups V1, V2, V3, V4.

For example, a writing tool 40 can comprise a green marker and a further red marker, interchangeable with each other, so as to mark on said sacrificial panel 2 positioning indications for the positioning of the suction cups V1, V2, V3, V4 for different and consecutive machinings.

Furthermore, said writing tool 40 can comprise elastic means, such as a spring, for absorbing the impacts between said writing tool 40, in use, and said sacrificial panel 2.

Furthermore, each writing tool 40 can mark, on each sacrificial panel 2, a first plurality of positioning indications D, of substantially rectangular shape for a first machining of panels P, and a second plurality of positioning indications D, of substantially circular shape for a second machining of panels P.

As said, the logic control unit U is configured to move said machining head 4. In particular, the logic control unit U can be suitably programmed to perform the different machinings.

More specifically, said logic control unit U is capable of reading the positioning data C, C1, C2, C3, C4 of a respective element P, V1, V2, V3, V4 on said sacrificial panel 2.

Said positioning indications D, D1, D2, D3, D4 will subsequently be drawn by said writing tool 40 around or on each position C, C1, C2, C3, C4 read by said logic control unit U.

The operation of the method described above takes place in the following way for each type of machining.

Initially, the operator selects a type of machining of said panel P to be machined.

Subsequently, said writing tool 40, installed on said working head 4, is moved by said logic control unit U to mark, on at least one sacrificial panel 2, at least one positioning indication D to indicate the position of the respective panels P on at least one sacrificial panel 2.

Subsequently, each panel P is positioned on the respective positioning indication D. For example, said positioning indication circumscribes a machining area, on which positioning said panel P to be machined.

Subsequently, if it is desired to pass to a further type of machining of the panels P, the operations described above can be repeated using a different positioning indication D, by shape, type of line, or color.

As mentioned, this latter operation can be performed after the machining of the panels P, carried out with a first type of machining.

Alternatively, at first it is possible to mark positioning indications D of a different type on said sacrificial panel 2, and, subsequently, the panels P can be machined by means of different machinings simply by positioning the panels P in their respective operating positions.

Finally, if the sacrificial panel 2 has to be cleaned from the previously marked positioning indications D, it is possible to provide for a rectification of this sacrificial panel 2, generally carried out by means of removal means, such as cutters or planers.

This allows to remove the positioning indications D marked on the sacrificial panel 2, and, therefore, to reuse the same sacrificial panel 2 for multiple machinings.

The operations described above are the same for the positioning of suction cups V1, V2, V3, V4 on the respective positioning indications D1, D2, D3, D4 drawn on said sacrificial panel 2.

In particular, by means of the writing tool 40, one or more positioning indications D1, D2, D3, D4 are reported on the sacrificial panel 2, according to the number of suckers V1, V2, V3, V4 required.

In this way, the user can easily position the suction cups V1, V2, V3, V4 on the sacrificial panel 2, in correspondence of said positioning indications D1, D2, D3, D4.

The panel P to be machined can thus be placed on said suction cups V1, V2, V3, V4, and vacuum can be applied, so as to retain the panel P, coupled to the suction cups V1, V2, V3, V4, so as to perform the required machinings by means of machining head 4 through a suitable machining tool.

Also, in this case, further positioning indications D1, D2, D3, D4 can be reported on the sacrificial panel 2, for other machinings, possibly by writing tools 40 having a different color.

Furthermore, after a certain number of machining operations, also in this case, the sacrificial panel 2 can be rectified by milling or planing.

### Advantages

A first advantage of the positioning method according to the present invention is that of allowing a quick and effective arrangement of the elements on the sacrificial panel. This allows, for example, reducing the number of panels discarded, during the machining phases, due to their incorrect alignment with the respective sacrificial panel.

A further advantage of the positioning method according to the present invention is that of minimizing machine downtime and therefore reducing the related machining costs.

Another advantage of the positioning method according to the present invention is that it is independent of the operator's experience level.

Finally, a further advantage of the positioning method according to the present invention is that it can be implemented on already existing machines for machining the panels, thus being a method that can be implemented at competitive costs.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Method for positioning at least one element (P, V1, V2, V3, V4) on a supporting panel, such as a sacrificial panel (2), arranged on a work table (11) of a machine (1) for machining wood panels (P) and the like, wherein said method comprises the following steps:
A) reading positioning data (C, C1, C2 C3, C4) of said at least one element (P, V1, V2, V3, V4) on said sacrificial panel (2); and **characterised by**
B) marking, on the upper surface of said sacrificial panel (2), at least one positioning sign (D, D1, D2, D3, D4) associated to said positioning data (C, C1, C2 C3, C4) of said at least one element (P, V1, V2, V3, V4); and
C) placing said at least one element (P, V1, V2, V3, V4) in correspondence of the respective positioning sign (D, D1, D2, D3, D4).

2. Method according to the preceding claim, **characterised in that** said positioning signs (D, D1, D2, D3, D4) are graphic signs.

3. Method according to any one of the preceding claims, **characterised in that** said positioning signs (D, D1, D2, D3, D4) are engravings.

4. Method according to any one of the preceding claims, **characterised in that** said at least one element (P, V1, V2, V3, V4) is a panel (P) to be machined.

5. Method according to any one of claims 1-3, **characterised in that** said at least one element (P, V1, V2, V3, V4) comprises at least one blocking/releasing mean (V1, V2, V3, V4) for said panels (P) to be machined, wherein said blocking/releasing means (V1, V2, V3, V4) are preferably suction cups (V1, V2, V3, V4).

6. Method according to any one of the preceding claims, **characterised in that** said step C) comprises the following sub-step:
C1) at least partially covering, by means of said at least one element (P, V1, V2, V3, V4), said positioning signs (D, D1, D2, D3, D4).

7. Method according to any one of the preceding claims, **characterised in that** said sacrificial panel (2) is transpiring, and in comprising, after said step C), the following further step:
D) making, between said sacrificial panel (2) and said work table (11), a vacuum condition so as to hold in position said at least one element (P, V1, V2, V3, V4).

8. Method according to any one of the preceding claims, **characterised in** comprising, after said step C), the following further step:
E) deleting said positioning signs (D, D1, D2, D3, D4) marked on said sacrificial panel (2), so as to re-use said sacrificial panel (2) for further machining.

9. Method according to any one of the preceding claims, **characterised in that** said step B) comprises the sub-step of marking, on the upper surface of said sacrificial panel (2), at least a first and a second positioning sign (D, D1, D2, D3, D4), wherein said first positioning sign (D, D1, D2, D3, D4) has a different shape and/or hatching and/or colour than said second positioning sign (D, D1, D2, D3, D4).

10. Machine (1) for machining panels (P), comprising
a work table (11), intended to support at least one sacrificial panel (2),
a baseplate (12), on which said work table (11) is arranged,
a transverse (13), moveable over said work table (11), in a direction along a first axis (X), and
a group (14), moveable along said transverse (13), in a direction along a second axis (Y), perpendicular to said first axis (X), and along a third axis (Z) perpendicular to said first axis (X) and to said second axis (Y),
wherein said group (14) further comprises
a machining head (4), a writing tool (40) and/or a milling member, wherein said writing tool (40) and/or said milling member are capable of marking at least one positioning sign (D, D1, D2, D3, D4) on said sacrificial panel (2),
said machine (1) being **characterised in** comprising a logic control unit (U) configured for moving said machining head (4), so as to execute the method according to any one of the preceding claims.

11. Machine (1) for machining panels (P) according to the preceding claim, **characterised in that** said writing tool (40) and/or milling member are removably coupled to said machining head (4).

12. Machine (1) according to any one of claim 10 or 11, **characterised in that** said writing tool (40) is capable of marking said at least one positioning sign (D, D1, D2, D3, D4) on said sacrificial panel (2) by means of ink or pencil, wherein said positioning signs (D, D1, D2, D3, D4) can have different shapes and/or hatchings and/or colours.

13. Machine (1) according to any one of claims 10-12, **characterised in that** said writing tool (40) has elastic means for absorbing shocks between said writing tool (40), in use, and said sacrificial panel (2).

14. Machine (1) according to any one of claims 10-13, **characterised in** comprising at least one deleting mean, preferably a milling cutter or a planer, for deleting said positioning signs (D, D1, D2, D3, D4) marked on said sacrificial panel (2) so as to re-use said sacrificial panel (2) for further machining.

15. Machine (1) according to any one of claims 10-14, comprising a storage for storing at least one writing tool (40) and/or said milling member.

## Patentansprüche

1. Verfahren zur Positionierung zumindest eines Elements (P, V1, V2, V3, V4) auf einer Trägerplatte, wie beispielsweise einer Opferplatte (2), die auf einem Arbeitstisch (11) einer Maschine (1) zur Bearbeitung von Holzplatten (P) und dergleichen angeordnet ist, wobei das Verfahren die folgenden Schritte umfasst:
A) Lesen der Positionierungsdaten (C, C1, C2, C3, C4) des zumindest einen Elements (P, V1, V2, V3, V4) auf der Opferplatte (2);
und **gekennzeichnet ist durch** das:
B) Markieren, auf der oberen Oberfläche der Opferplatte (2), zumindest eines Positionierungszeichens (D, D1, D2, D3, D4), das den Positionierungsdaten (C, C1, C2, C3, C4) des zumindest einen Elements (P, V1, V2, V3, V4) zugeordnet ist; und
C) Platzieren des zumindest einen Elements (P, V1, V2, V3, V4) an dem entsprechenden Positionierungszeichen (D, D1, D2, D3, D4).

2. Verfahren nach dem vorhergehenden Anspruch, **dadurch gekennzeichnet, dass** die Positionierungszeichen (D, D1, D2, D3, D4) graphische Zeichen sind.

3. Verfahren nach einem der vorhergehenden Ansprüche, **dadurch gekennzeichnet, dass** die Positionierungszeichen (D, D1, D2, D3, D4) Gravuren sind.

4. Verfahren nach einem der vorhergehenden Ansprüche, **dadurch gekennzeichnet, dass** das zumindest eine Element (P, V1, V2, V3, V4) eine zu bearbeitende Platte (P) ist.

5. Verfahren nach einem der Ansprüche 1-3, **dadurch gekennzeichnet, dass** das zumindest eine Element (P, V1, V2, V3, V4) zumindest ein Festhalte-/Freigabemittel (V1, V2, V3, V4) für die zu bearbeitenden Platten (P) umfasst, wobei die Festhalte-/Freigabemittel (V1, V2, V3, V4) vorzugsweise Saugnäpfe (V1, V2, V3, V4) sind.

6. Verfahren nach einem der vorhergehenden Ansprüche, **dadurch gekennzeichnet, dass** der Schritt C) folgenden Unterschritt beinhaltet:
C1) zumindest teilweises Bedecken, mittels des zumindest einen Elements (P, V1, V2, V3, V4), der Positionierungszeichen (D, D1, D2, D3, D4).

7. Verfahren nach einem der vorhergehenden Ansprüche, **dadurch gekennzeichnet, dass** die Opferplatte (2) transpiriert, und dadurch, dass es, nach dem Schritt C), folgenden weiteren Schritt beinhaltet:
D) Herstellen, zwischen der Opferplatte (2) und dem Arbeitstisch (11), eines Vakuumzustands, um das zumindest eine Element (P, V1, V2, V3, V4) in Position zu halten.

8. Verfahren nach einem der vorhergehenden Ansprüche, **dadurch gekennzeichnet, dass** es nach dem Schritt C), folgenden weiteren Schritt beinhaltet:
E) Löschen des Positionierungszeichens (D, D1, D2, D3, D4), das auf der Opferplatte (2) markiert wurde, um die Opferplatte (2) für weitere Bearbeitungen wiederzuverwenden.

9. Verfahren nach einem der vorhergehenden Ansprüche, **dadurch gekennzeichnet, dass** der Schritt B) den Unterschritt des Markierens, auf der oberen Oberfläche der Opferplatte (2), zumindest eines ersten und eines zweiten Positionierungszeichens (D, D1, D2, D3, D4) beinhaltet, wobei das erste Positionierungszeichen (D, D1, D2, D3, D4) eine andere Form und/oder Schraffierung und/oder Farbe aufweist als das zweite Positionierungszeichen (D, D1, D2, D3, D4).

10. Maschine (1) zur Bearbeitung von Platten (P), umfassend:
einen Arbeitstisch (11), der dazu bestimmt ist, zumindest eine Opferplatte (2) zu tragen, eine Grundplatte (12), auf welcher der Arbeitstisch (11) angeordnet ist,
einen Querträger (13), der über dem Arbeitstisch (11) in einer Richtung entlang einer ersten Achse (X) beweglich ist, und
eine Gruppe (14), die entlang des Querträgers (13) in einer Richtung entlang einer zweiten Achse (Y) beweglich ist, die orthogonal zu der ersten Achse (X) ist, und entlang einer dritten Achse (Z), die orthogonal zu der ersten Achse (X) und zu der zweiten Achse (Y) ist,
wobei die Gruppe (14) ferner umfasst:
einen Bearbeitungskopf (4),
ein Schreibinstrument (40) und/oder ein Fräsorgan, wobei das Schreibinstrument (40) und/oder das Fräsorgan geeignet sind, zumindest ein Positionierungszeichen (D, D1, D2, D3, D4) auf der Opferplatte (2) zu markieren,
wobei die Maschine (1) **dadurch gekennzeichnet ist, dass** sie eine logische Steuereinheit (U) umfasst, die dafür konfiguriert ist, den Bearbeitungskopf (4) so zu bewegen, dass das Verfahren nach einem der vorhergehenden Ansprüche ausgeführt wird.

11. Maschine (1) zur Bearbeitung von Platten (P) nach dem vorhergehenden Anspruch, **dadurch gekennzeichnet, dass** das Schreibinstrument (40) und/oder das Fräsorgan abnehmbar an den Bearbeitungskopf (4) gekoppelt sind.

12. Maschine (1) nach einem der Ansprüche 10 oder 11, **dadurch gekennzeichnet, dass** das Schreibinstrument (40) geeignet ist, das zumindest eine Positionierungszeichen (D, D1, D2, D3, D4) auf der Opferplatte (2) mittels Tinte oder Stift zu markieren, wobei die Positionierungszeichen (D, D1, D2, D3, D4) verschiedene Formen und/oder Schraffierungen und/oder Farben aufweisen können.

13. Maschine (1) nach einem der Ansprüche 10-12, **dadurch gekennzeichnet, dass** das Schreibinstrument (40) elastische Mittel aufweist, um, im Gebrauch, Stöße zwischen dem Schreibinstrument (40) und der Opferplatte (2) zu dämpfen.

14. Maschine (1) nach einem der Ansprüche 10-13, **dadurch gekennzeichnet, dass** sie zumindest ein Löschmittel umfasst, vorzugsweise einen Fräser oder einen Hobel, um die Positionierungszeichen (D, D1, D2, D3, D4), die auf der Opferplatte (2) markiert wurden, zu entfernen und die Opferplatte (2) für weitere Bearbeitungen wiederverwenden zu können.

15. Maschine (1) nach einem der Ansprüche 10-14, umfassend ein Magazin zur Aufbewahrung des zumindest einen Schreibinstruments (40) und/oder Fräsorgans.

## Revendications

1. Méthode de positionnement d'au moins un élément (P, V1, V2, V3, V4) sur une planche de support, telle qu'une planche martyre (2), disposée sur une table d'usinage (11) d'une machine (1) pour l'usinage de panneaux en bois (P) et similaires, où ladite méthode comprend les étapes suivantes :
A) lire des données de positionnement (C, C1, C2 C3, C4) dudit au moins un élément (P, V1, V2, V3, V4) sur ladite planche martyre (2) ;
et **caractérisée par**
B) marquer, sur la surface supérieure de ladite planche martyre (2), au moins un signe de positionnement (D, D1, D2, D3, D4) associé auxdites données de positionnement (C, C1, C2 C3, C4) dudit au moins un élément (P, V1, V2, V3, V4) ; et
C) placer ledit au moins un élément (P, D1, D2, D3, D4) au niveau du signe de positionnement (D, D1, D2, D3, D4) respectif.

2. Méthode selon la revendication précédente, **caractérisée en ce que** lesdits signes de positionnement (D, D1, D2, D3, D4) sont des signes graphiques.

3. Méthode selon l'une quelconque des revendications précédentes, **caractérisée en ce que** lesdits signes de positionnement (D, D1, D2, D3, D4) sont des incisions.

4. Méthode selon l'une quelconque des revendications précédentes, **caractérisée en ce que** ledit au moins un élément (P, V1, V2, V3, V4) est un panneau (P) à usiner.

5. Méthode selon l'une quelconque des revendications 1-3, **caractérisée en ce que** ledit au moins un élément (P, V1, V2, V3, V4) comprend au moins un moyen de blocage/relâche (V1, V2, V3, V4) pour lesdits panneaux (P) à usiner, où lesdits moyens de blocage/relâche (V1, V2, V3, V4) sont de préférence des ventouses (V1, V2, V3, V4).

6. Méthode selon l'une quelconque des revendications précédentes, **caractérisée en ce que** ladite étape C) comprend la sous-étape suivante :
C1) recouvrir au moins partiellement, au moyen dudit au moins un élément (P, V1, V2, V3, V4), lesdits signes de positionnement (D, D1, D2, D3, D4).

7. Méthode selon l'une quelconque des revendications précédentes, **caractérisée en ce que** ladite planche martyre (2) est transpirante, et **en ce qu'**elle comprend, après ladite étape C), l'autre étape suivante :
D) créer, entre ladite planche martyre (2) et ladite table d'usinage (11), une condition de vide de manière à maintenir en position ledit au moins un élément (P, V1, V2, V3, V4).

8. Méthode selon l'une quelconque des revendications précédentes, **caractérisée en ce qu'**elle comprend, après ladite étape C), l'autre étape suivante :
E) effacer lesdits signes de positionnement (D, D1, D2, D3, D4) marqués sur ladite planche martyre (2), de manière à réutiliser ladite planche martyre (2) pour un autre usinage.

9. Méthode selon l'une quelconque des revendications précédentes, **caractérisée en ce que** ladite étape B) comprend la sous-étape consistant à marquer, sur la surface supérieure de ladite planche martyre (2), au moins un premier et un deuxième signe de positionnement (D, D1, D2, D3, D4), où ledit premier signe de positionnement (D, D1, D2, D3, D4) a une forme et/ou un hachurage et/ou une couleur différent(e) que ledit deuxième signe de positionnement (D, D1, D2, D3, D4).

10. Machine (1) pour l'usinage de panneaux (P), comprenant
une table d'usinage (11), destinée à supporter au moins une planche martyre (2),
un bâti (12), sur lequel ladite table d'usinage (11) est disposée,
une traverse (13), mobile au-dessus de ladite table d'usinage (11), dans une direction le long d'un premier axe (X), et
un groupe (14), mobile le long de ladite traverse (13), dans une direction le long d'un deuxième axe (Y), perpendiculaire audit premier axe (X), et le long d'un troisième axe (Z) perpendiculaire audit premier axe (X) et audit deuxième axe (Y),
où ledit groupe (14) comprend en outre
une tête d'usinage (4),
un outil d'écriture (40) et/ou un organe de fraisage, où ledit outil d'écriture (40) et/ou ledit organe de fraisage sont capables de marquer au moins un signe de positionnement (D, D1, D2, D3, D4) sur ladite planche martyre (2),
ladite machine (1) étant **caractérisée en ce qu'**elle comprend une unité logique de contrôle (U) configurée pour mouvoir ladite tête d'usinage (4), de manière à exécuter la méthode selon l'une quelconque des revendications précédentes.

11. Machine (1) pour l'usinage de panneaux (P) selon la revendication précédente, **caractérisée en ce que** ledit outil d'écriture (40) et/ou organe de fraisage sont accouplés de façon amovible à ladite tête d'usinage (4).

12. Machine (1) selon l'une quelconque des revendications 10 ou 11, **caractérisée en ce que** ledit outil d'écriture (40) est capable de marquer ledit au moins un signe de positionnement (D, D1, D2, D3, D4) sur ladite planche martyre (2) au moyen d'encre ou d'un crayon, où lesdits signes de positionnement (D, D1, D2, D3, D4) peuvent avoir des formes et/ou hachurages et/ou couleurs différents.

13. Machine (1) selon l'une quelconque des revendications 10-12, **caractérisée en ce que** ledit outil d'écriture (40) a des moyens élastiques pour absorber les chocs entre ledit outil d'écriture (40), en utilisation, et ladite planche martyre (2).

14. Machine (1) selon l'une quelconque des revendications 10-13, **caractérisée en ce qu'**elle comprend au moins un organe d'effacement, de préférence une fraise ou un rabot, pour effacer lesdits signes de positionnement (D, D1, D2, D3, D4) marqués sur ladite planche martyre (2) de manière à réutiliser ladite planche martyre (2) pour un autre usinage.

15. Machine (1) selon l'une quelconque des revendications 10-14, comprenant un magasin pour stocker au moins un outil d'écriture (40) et/ou ledit organe de fraisage.
